# FASCICULE DE BREVET EUROPEEN

(11) **EP 1 709 344 B1**
(45) Date de publication et mention de la délivrance du brevet: **14.03.2012**
(21) Numéro de dépôt: 05717478.1
(22) Date de dépôt: 24.01.2005
(51) Int. Cl.: F16G 11/00, E01F 7/04

(54) **DISPOSITIF POUR REALISER LA JONCTION DE DEUX CABLES ENTRE EUX, LORS DE LA FABRICATION DES MAILLES D'UN FILET DE SECURITE**
VORRICHTUNG ZUR VERBINDUNG VON ZWEI KABELN WÄHREND DER HERSTELLUNG DER MASCHEN EINES SICHERHEITSNETZES
DEVICE FOR JOINING TWO CABLES DURING THE MANUFACTURE OF THE MESH OF A SAFETY NET

(30) Priorité: 27.01.2004 FR 0400752
(43) Date de publication de la demande: 11.10.2006
(73) Titulaire: Géotechnique et Travaux Spéciaux - GTS, 69800 Saint Priest (FR)
(72) Inventeur: ROBIT, Philippe, F-38144 Notre Dame De Vaulx (FR); FORGEOT, Philippe, F-69600 Oullins (FR)
(74) Mandataire: Maureau, Philippe
(86) Numéro de dépôt international: PCT/FR2005/000154
(87) Numéro de publication internationale: WO 2005/083295

(56) Documents cités:
- FR-A- 789 428
- US-A- 923 558
- US-A- 1 790 694
- US-A- 2 440 532

## Description

La présente invention concerne un ensemble comprenant deux câbles, et un dispositif pour réaliser la jonction de ces deux câbles notamment lors de la fabrication des mailles d'un filet de sécurité.

L'état de la technique est illustré par les documents US2440532, FR789428, US923558, et US1790694.

En particulier, le document US2440532 décrit un dispositif pour la jonction réversible de deux câbles, comprenant deux éléments de jonction identiques comportant un tronçon cylindrique, un tronçon intermédiaire et une portion annulaire délimitant une ouverture de section correspondant à celle du tronçon cylindrique, et située dans un plan perpendiculaire à l'axe du tronçon cylindrique, le tronçon intermédiaire étant recourbé et formant un angle β supérieur à 90°, les deux éléments de jonction étant destinés à être assemblés tête-bêche, par engagement du tronçon cylindrique de l'un dans l'ouverture de la portion annulaire de l'autre et inversement, et délimitant une ouverture pour le passage des deux câbles, chaque tronçon intermédiaire présentant un point d'appui pour un câble.

Lorsque l'on désire réaliser la jonction de deux câbles, par exemple lors de la réalisation de mailles dans la fabrication de filets de sécurité, notamment ceux utilisés en travaux publics, il est généralement nécessaire de réaliser un sertissage, à l'aide d'une pièce en métal en deux parties qui est mise en place autour des deux câbles de manière à les enserrer, puis qui est soit boulonnée, soit rivetée. Dans tous les cas, la mise en place est fastidieuse, et nécessite d'utiliser non seulement des pièces de sertissage, mais également des pièces de visserie.

La présente invention, vise à fournir un dispositif permettant de réaliser la jonction de deux câbles à un endroit donné le long de ceux-ci, dispositif qui soit très économique à produire, et simple à mettre en oeuvre, notamment, ne nécessitant que peu d'outillage et un temps de mise en place/retrait très court, et en même temps une sécurité optimale.

Le but de l'invention est atteint avec un ensemble conforme à la revendication 1.

Le dispositif selon l'invention est préférentiellement destiné à la réalisation de mailles dans des filets de sécurité tricotés.

Par "câbles", on entend tout élément filaire permettant de réaliser un filet, tel qu'une corde, un câble métallique ou en matière synthétique par exemple. La section du câble importe peu, mais sera généralement choisie cylindrique. Le câble utilisé avec le dispositif selon l'invention sera compressible élastiquement lorsque soumis à un effort perpendiculaire à son axe longitudinal.

L'autostabilité du dispositif selon l'invention est obtenue grâce à la structure décrite ci-avant. En effet, lors de leur mise en place autour des deux câbles par insertion l'un dans l'autre, les deux éléments de jonction s'imbriquent par un mouvement de translation suivant l'axe longitudinal At du tronçon cylindrique. Au cours de cette translation, les câbles passent par une première phase de compression jusqu'à un point de compression maximum, puis par une seconde phase de décompression, de préférence jusqu'à une compression résiduelle obtenue lorsque les deux éléments arrivent en butée. Pour désaccoupler les deux éléments, il faut repasser par le point de compression maximum des câbles donc exercer un effort de traction suivant l'axe de translation. Cette traction ne peut être exercée que par une intervention extérieure, la pièce est donc autostable.

Avantageusement, chaque élément de jonction du dispositif selon l'invention comprend un évidement en forme de tronçon de surface cylindrique, ménagé dans le tronçon intermédiaire à proximité du tronçon cylindrique. Dans cet évidement, le câble correspondant audit élément de jonction vient se loger, et ses mouvements dans le sens latéral sont ainsi très limités, voire empêchés.

De préférence, le dispositif est en position fermée et verrouillé de manière réversible lorsque l'angle α entre l'axe Ac passant par le centre des deux câbles et l'axe At des tronçons cylindriques, est égal à l'angle β de courbure du tronçon intermédiaire.

Selon une forme particulièrement préférée de l'invention, le tronçon intermédiaire de chaque élément de jonction présente une butée au niveau de son point de jonction avec le tronçon cylindrique, butée servant, lors du verrouillage du dispositif, à stopper le coulissement des deux éléments de jonction l'un dans l'autre, en prenant appui sur le bord intérieur de la portion annulaire de l'élément de jonction correspondant.

Avantageusement, les éléments de jonction sont réalisés en métal moulé. Etant donné que les deux éléments de jonction du dispositif sont identiques et réalisés en métal moulé, on diminue fortement les coûts de fabrication, et on obtient ainsi un dispositif de jonction de câbles très efficace et économique.

Selon une forme préférée d'exécution de l'invention, les câbles joints grâce au dispositif sont des câbles métalliques, utilisés pour la réalisation d'un filet de sécurité destiné à l'emploi dans le domaine des travaux publics ou de sécurisation des chaussées.

Pour sa bonne compréhension, l'invention va à présent être décrite en détail, en référence au dessin schématique annexé, représentant à titre d'exemple non limitatif, une forme particulière d'exécution d'un dispositif de jonction de câbles, selon l'invention.
Figure 1 est une vue en perspective éclatée de deux pièces de jonction du dispositif selon l'invention;
Figure 2 est une vue en coupe de deux pièces de jonction du dispositif selon l'invention ;
Les figures 3a à 3e sont des vues schématiques des différentes positions du dispositif au cours de sa fermeture autour des câbles, et
Figure 4 est une vue schématique de profil du dispositif selon l'invention assemblé autour de deux câbles.

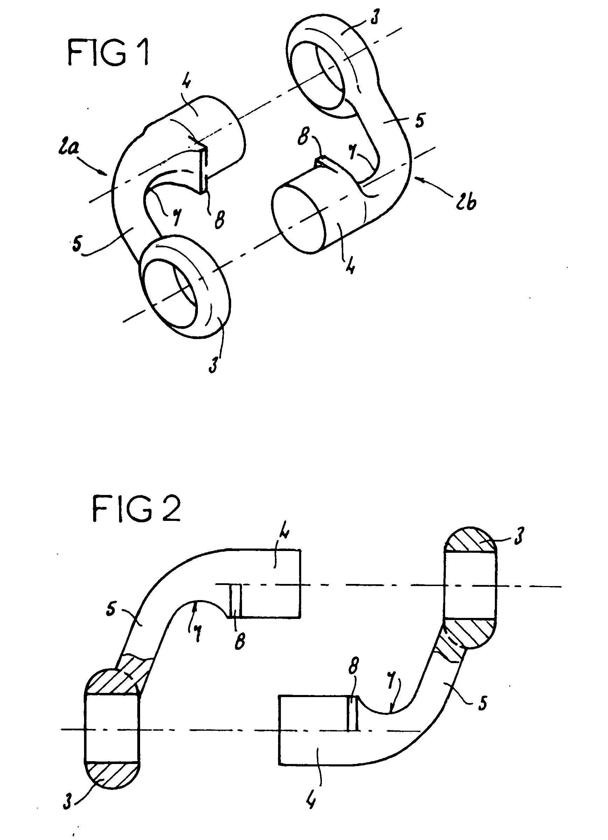

Comme illustré aux figures 1 et 2, le dispositif 1 selon l'invention comprend deux éléments de jonction 2a et 2b identiques, destinés à être imbriqués en position tête-bêche par coulissement l'un dans l'autre. Chaque élément de jonction 2a, 2b comprend une portion annulaire 3 et un tronçon cylindrique 4 dont la section est inférieure au diamètre intérieur de l'ouverture définie par la portion annulaire, pour permettre le coulissement des deux éléments de jonction l'un dans l'autre.

La portion annulaire 3 et le tronçon cylindrique 4 sont reliés par un tronçon intermédiaire 5, recourbé avec un angle β d'environ 110°.

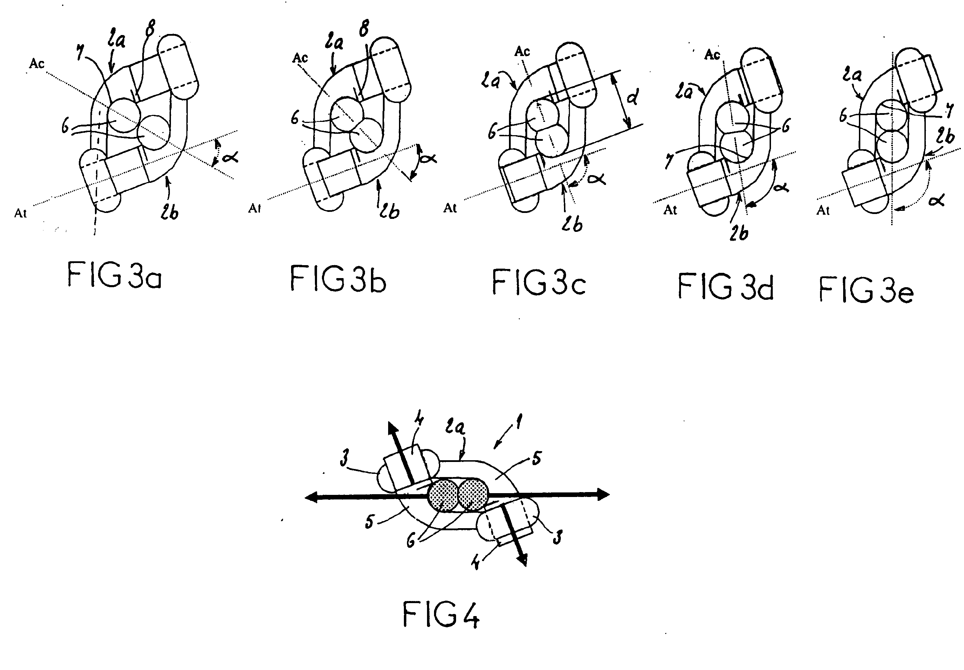

Comme illustré aux figures 3a à 3e, le dispositif 1 selon l'invention permet la jonction réversible de deux câbles 6 entre eux pour former un maillage d'un filet de sécurité. La mise en place des deux éléments de jonction 2a et 2b autour des deux câbles 6, est réalisée en faisant passer ces derniers à l'intérieur de la lumière formée par le dispositif 1 lorsque l'on assemble les deux pièces de jonction.

Chaque élément de jonction (2a, 2b) du dispositif selon l'invention comprend un évidement en forme de tronçon de surface cylindrique, ménagé dans le creux du tronçon intermédiaire (5) à proximité du tronçon cylindrique (4). Dans cet évidement, le câble correspondant audit élément de jonction vient se loger, et ses mouvements dans le sens latéral sont ainsi très limités, voire empêchés.

En fonctionnement, on dispose les deux éléments de jonction tête-bêche, de manière à ce qu'ils viennent entourer les deux câbles à joindre, comme illustré aux figures 3a à 3e. Chaque câble est alors disposé au creux formé par la courbure du tronçon intermédiaire 5. On réalise ensuite la fermeture du dispositif 1 par resserrement des deux éléments de jonction 2a, 2b à l'aide d'un outil tel qu'une pince. Un outil similaire sera utilisé lorsque l'on désirera rouvrir le dispositif.

Au cours du coulissement d'un élément de jonction dans l'autre lors de la fermeture du dispositif 1 autour des câbles 6, lorsque l'angle α entre l'axe Ac passant par les centres des deux câbles 6 et l'axe longitudinal At du tronçon cylindrique est égal à 90°, la distance "d", mesurée selon l'axe Ac, entre les points d'appui 7 des câbles sur la surface intérieure des éléments de jonction qui sont les plus éloignés les uns des autres, est minimale et inférieure à la somme des diamètres des deux câbles qui sont alors comprimés élastiquement selon l'axe Ac.

Cette position, représentée à la figure 3c correspond à un point de compression maximum des deux câbles. Aux figures 3b à 3e, et en particulier à la figure 3c, la compression des deux câbles est représentée schématiquement par un écrasement partiel des deux cercles les représentant en coupe, au niveau de leur point de contact.

Une fois passé le point de compression maximum décrit ci-dessus et représenté à la figure 3c et lorsque l'on poursuit le coulissement des deux éléments de jonction l'un dans l'autre, le dispositif se retrouve en position fermée et verrouillé de manière réversible, dès que α est supérieur à 90°. Dans ce dernier cas représenté à la figure 3d, dès que α est supérieur à 90°, la compression entre les deux câbles diminue, et la compression résiduelle entre ceux-ci force les deux éléments de jonction 2a et 2b encore plus avant l'un dans l'autre. Alors, le dispositif est autostable.

Plus encore, une traction sur les câbles, perpendiculairement à leurs axes longitudinaux, donc dans une direction qui chercherait à les éloigner l'un de l'autre, provoque alors un effort sur le dispositif, qui force les deux éléments de jonction 2a et 2b encore plus avant l'un dans l'autre et donc verrouille plus encore le dispositif en position fermée, comme cela est représenté schématiquement à la figure 4, les grandes flèches correspondant aux efforts de traction exercés sur les câbles 6, et les petites flèches illustrant l'effort de chaque tronçon cylindrique 4 vers l'intérieur de la portion annulaire 3 correspondante.

En fait, le dispositif est en position complètement fermée et verrouillé, comme illustré à la figure 3e, de manière réversible lorsque α=β, qui correspond à la mise en butée des deux éléments de jonction 2a et 2b l'un dans l'autre, lorsque ces derniers sont latéralement en contact avec les câbles comme illustré à la figure 3e. En effet, le tronçon intermédiaire 5 de chaque élément de jonction présente, comme illustré à la figure 1, une butée 8 au niveau de son point de jonction avec le tronçon cylindrique 4. La butée 8 de chaque élément de jonction, sert lors du verrouillage du dispositif, à stopper le coulissement des deux éléments de jonction l'un dans l'autre, en prenant appui sur le bord intérieur de la portion annulaire 3 de l'élément de jonction correspondant.

Il est à noter que la valeur de l'angle β conditionne la différence entre la compression maximum des câbles (lorsque α = 90°) et la compression résiduelle. Plus β est grand, plus cette différence est grande, et donc plus le dispositif est stable en position verrouillée, car il est alors nécessaire d'appliquer une grande force pour pouvoir passer le point de compression maximum.

En outre, la distance "d" lorsque le dispositif est fermé, conditionne la valeur de la compression résiduelle. Cette hauteur est inférieur ou égale au double diamètre des câbles mesuré lorsque ceux-ci sont au repos (c'est-à-dire à l'état non comprimé). Si elle est égale au double diamètre des câbles, la compression résiduelle est nulle.

La largeur de l'espace libre intérieur de la double pièce fermée est égale au diamètre des câbles.

Pour rouvrir le dispositif, il est nécessaire d'écarter les deux éléments de jonction l'un de l'autre, à partir de la position représentée à la figure 3e, qui correspond à un état de moindre compression des câbles. Il faut alors écarter suffisamment les deux éléments de jonction 2a et 2b et repasser par le point de compression maximum des deux câbles où α=90°. Dans ce cas, la force nécessaire à l'ouverture est proportionnelle à la pression exercée par les deux câbles, selon l'axe Ac, sur les parois intérieures des éléments de jonction.

Il va de soi que l'invention n'est pas limitée à la forme de réalisation décrite ci-dessus à titre exemple mais qu'elle en embrasse au contraire toutes les variantes. Ainsi, la forme et les dimensions des éléments de jonction peuvent varier, en particulier en fonction du type de câbles à relier.

En outre, la forme de la portion annulaire peut varier. Ainsi, l'exemple décrit ci-avant, dans lequel la portion annulaire de chaque élément de jonction, est circulaire, n'est pas donnée à titre limitatif, au contraire. On pourra envisager une portion "annulaire" formant passant, dont la forme générale pourra être ovale, triangulaire, octogonale, ou autre. La forme correspondante du tronçon cylindrique sera alors évidemment adaptée en conséquence.

## Revendications

1. Ensemble comportant :
- deux câbles (6), et
- un dispositif (1) pour la jonction réversible de ces deux câbles (6), comprenant deux éléments de jonction (2a, 2b) identiques comportant un tronçon cylindrique (4), un tronçon intermédiaire (5) et une portion annulaire (3) délimitant une ouverture de section correspondant à celle du tronçon cylindrique (4), et située dans un plan perpendiculaire à l'axe du tronçon cylindrique (4), le tronçon intermédiaire (5) étant recourbé et formant un angle β de courbure supérieur à 90°, les deux éléments de jonction (2a, 2b) étant destinés à être assemblés tête-bêche, par engagement du tronçon cylindrique (4) de l'un dans l'ouverture de la portion annulaire (3) de l'autre et inversement, et délimitant une ouverture pour le passage des deux câbles, chaque tronçon intermédiaire (5) présentant un point d'appui (7) pour un câble,
**caractérisé en ce que** les deux éléments de jonction sont dimensionnés de telle sorte que la distance "d" entre les points d'appui des deux câbles, lorsque l'axe Ac passant par le centre des deux câbles est perpendiculaire aux axes At des tronçons cylindriques, est inférieure au double du diamètre des câbles en position non comprimée de ceux-ci.

2. Ensemble (1) selon la revendication 1, **caractérisé en ce que** chaque élément de jonction (2a, 2b) comprend un évidement en forme de tronçon de surface cylindrique, ménagé dans le tronçon intermédiaire (5) à proximité du tronçon cylindrique (4).

3. Ensemble (1) selon les revendications 1 ou 2, **caractérisé en ce que** le dispositif est en position fermée, et verrouillé de manière réversible, lorsque l'angle α entre l'axe Ac passant par le centre des deux câbles (6) et l'axe At des tronçons cylindriques (4), est égal à l'angle β de courbure du tronçon intermédiaire (5).

4. Ensemble (1) selon les revendications 1 à 3, **caractérisé en ce que** le tronçon intermédiaire (5) de chaque élément de jonction présente une butée (8) au niveau de son point de jonction avec le tronçon cylindrique (4), butée servant, lors du verrouillage du dispositif, à stopper le coulissement des deux éléments de jonction (2a, 2b) l'un dans l'autre, en prenant appui sur le bord intérieur de la portion annulaire (3) de l'élément de jonction correspondant.

5. Ensemble (1) selon les revendications 1 à 4, **caractérisé en ce que** les éléments de jonction (2a, 2b) sont réalisés en métal moulé.

6. Ensemble (1) selon les revendications 1 à 5, **caractérisé en ce que** les câbles (6) sont des câbles métalliques.

## Claims

1. An assembly comprising:
- two cables (6), and
- a device (1) for reversibly joining said two cables (6), comprising two identical junction elements (2a, 2b) comprising a cylindrical segment (4), an intermediate segment (5), and an annular portion (3) delimiting an opening with a section corresponding to that of the cylindrical segment (4), and situated in a plane perpendicular to the axis of the cylindrical segment (4), the intermediate segment (5) being curved and forming a curve angle β greater than 90°, the two junction elements (2a, 2b) being intended to be assembled head to tail, by engaging the cylindrical segment (4) of one into the opening of the annular portion (3) of the other and vice versa, and delimiting an opening for the passage of the two cables, each intermediate segment (5) having a bearing point (7) for a cable,
**characterized in that** the two junction elements are dimensioned so that the distance "d" between the bearing points of the two cables, when the axis Ac passing through the center of the two cables is perpendicular to the axes At of the cylindrical segments, is smaller than twice the diameter of the cables in the non-compressed position thereof.

2. The assembly (1) according to claim 1, **characterized in that** each junction element (2a, 2b) comprises a recess in the form of a segment with a cylindrical surface, formed in the intermediate segment (5) near the cylindrical segment (4).

3. The assembly (1) according to claims 1 or 2, **characterized in that** the device is in the closed position, and reversibly locked, when the angle α between the axis Ac passing through the center of the two cables (6) and the axis At of the cylindrical segments (4) is equal to the angle of curvature β of the intermediate segment (5).

4. The assembly (1) according to claims 1 to 3, **characterized in that** the intermediate segment (5) of each junction element has a stop (8) at its junction point with the cylindrical segment (4), the stop serving, during locking of the device, to stop the sliding of the two junction elements (2a, 2b) one in the other, bearing on the inner edge of the annular portion (3) of the corresponding junction element.

5. The assembly (1) according to claims 1 to 4, **characterized in that** the junction elements (2a, 2b) are made from molded metal.

6. The assembly (1) according to claims 1 to 5, **characterized in that** the cables (6) are metal cables.

## Patentansprüche

1. Gruppe, die aufweist:
- zwei Kabel (6), und
- eine Vorrichtung (1) für die reversible Verbindung dieser zwei Kabel (6), die zwei identische Verbindungselemente (2a, 2b) umfasst, die ein zylindrisches Teilstück (4), ein Übergangs-Teilstück (5) und einen ringförmigen Abschnitt (3) aufweisen, der eine Öffnung mit einem Querschnitt begrenzt, die dem des zylindrischen Teilstücks (4) entspricht und sich in einer Ebene senkrecht zur Achse des zylindrischen Teilstücks (4) befindet, wobei das Übergangs-Teilstück (5) gekrümmt ist und einen Krümmungswinkel β größer als 90° bildet, wobei die zwei Verbindungselemente (2a, 2b) dazu bestimmt sind, Kopf an Fuß durch Einführen des zylindrischen Teilstücks (4) des einen in die Öffnung des ringförmigen Abschnitts (3) des anderen und umgekehrt verbunden zu sein und eine Öffnung für den Durchgang von zwei Kabeln definieren, wobei jedes Übergangs-Teilstück (5) einen Abstützpunkt (7) für ein Kabel aufweist,
**dadurch gekennzeichnet, dass** die zwei Verbindungselemente derart dimensioniert sind, dass der Abstand "d" zwischen den Abstützpunkten der zwei Kabel kleiner ist als das Doppelte des Durchmessers der Kabel in nicht komprimierter Stellung derselben, wenn die Achse Ac, die durch das Zentrum der zwei Kabel verläuft, senkrecht zu den Achsen At der zylindrischen Teilstücke ist.

2. Gruppe (1) nach Anspruch 1, **dadurch gekennzeichnet, dass** jedes Verbindungselement (2a, 2b) eine Aussparung in Form eines Teilstücks mit zylindrischer Oberfläche umfasst, die in das Übergangs-Teilstück (5) in der Nähe des zylindrischen Teilstücks (4) eingearbeitet ist.

3. Gruppe (1) nach den Ansprüchen 1 oder 2, **dadurch gekennzeichnet, dass** sich die Vorrichtung in geschlossener Stellung befindet und reversibel verriegelt ist, wenn der Winkel α zwischen der Achse Ac, die durch das Zentrum der zwei Kabel (6) verläuft, und der Achse At der zylindrischen Teilstücke (4) gleich dem Krümmungswinkel β des Übergangs-Teilstücks (5) entspricht.

4. Gruppe (1) nach den Ansprüchen 1 bis 3, **dadurch gekennzeichnet, dass** das Übergangs-Teilstück (5) jedes Verbindungselements einen Anschlag (8) auf Ebene seines Verbindungspunkts mit dem zylindrischen Teilstück (4) aufweist, wobei der Anschlag bei der Verriegelung der Vorrichtung dazu dient, das Gleiten der zwei Verbindungselemente (2a, 2b) ineinander durch Abstützung auf den inneren Rand des ringförmigen Abschnitts (3) des entsprechenden Verbindungselements zu stoppen.

5. Gruppe (1) nach einem der Ansprüche 1 bis 4, **dadurch gekennzeichnet, dass** die Verbindungselemente (2a, 2b) aus geformtem Metall sind.

6. Gruppe (1) nach den Ansprüchen 1 bis 5, **dadurch gekennzeichnet, dass** die Kabel (6) Metallkabel sind.
